# EUROPEAN PATENT APPLICATION

(11) **EP 2 763 100 A1**
(43) Date of publication of application: **06.08.2014**
(21) Application number: 12832729.3
(22) Date of filing: 08.03.2012
(51) Int. Cl.: G06Q 50/10, G06F 9/50, G06Q 30/04

(54) **CLOUD-SHARING RESOURCE PROVISION SYSTEM**

(30) Priority: 26.09.2011 JP 2011209128
(71) Applicant: Hitachi Systems, Ltd., Tokyo 141-8672 (JP)
(72) Inventor: TAMURA, Mineyuki, Tokyo 141-8672 (JP)
(74) Representative: Renard, Alexis
(86) International application number: PCT/JP2012/056039
(87) International publication number: WO 2013/046751

(57) **Abstract**

Readiness, cost performance, etc. related to usage of public clouds by users are achieved. In this system, a plurality of user terminals 2, a resource provider 1, and a plurality of public clouds 3 are connected by a network. A shared-use server (SS) 31 is installed in each of the public clouds 3. In the resource provider 1, a registration unit 11 of a server 10 stores data of the user program (UP) in a pool 50 together with management information 51. The execution control unit 12 carries out control so that a UP of the pool 50 is executed in the SS 31 of the target public cloud 3. A monitor system 40 monitors operation of the UP in the SS 31 and carries out charge calculation processing with respect to the user based on the monitoring.

## Description

### TECHNICAL FIELD

The present invention relates to technique of information processing of, for example, cloud computing. The present invention particularly relates to technique for users to effectively utilize, for example, public clouds.

### BACKGROUND ART

Various public clouds are present as cloud computing systems. Examples of those include Amazon EC2 (Amazon Elastic Compute Cloud) (Non Patent Literature 1). When an unspecified general user is to utilize a public cloud (resource/service processing of it, etc.), a server or the like of the public cloud is accessed from a computer system, terminal, or the like of the user, and software program processing (application processing or batch processing etc.; for example, online business processing of a company) desired by the user is achieved by using, for example, service processing or data of a storage provided by a virtual server.

Examples of existing technique related to batch processing include Japanese Patent Application Laid-Open No. 2011-70318 (Patent Literature 1) etc.

### Citation List

### Patent Literature

Patent Literature 1: Japanese Patent Application Laid-Open Publication No. 2011-70318

### Non Patent Literature

Non Patent Literature 1: "(Amazon Elastic Compute Cloud (Amazon EC2) ", amazon web services (Trademark), [searched on August 1, 2011], on the Internet <URL: http://aws.amazon.com/ec2/>

### DISCLOSURE OF THE INVENTION

### PROBLEMS TO BE SOLVED BY THE INVENTION

As the above-described various public clouds are present and methods of using the public clouds by users are various, the users have to use the usage methods or charge systems corresponding to unique public clouds. In other words, there are problems (room for improvement) about readiness (convenience), cost performance, etc. in utilization of the public clouds.

For example, when a user tries to achieve program processing such as desired application processing or batch processing using a certain public cloud, the user is charged based on a usage contract (charge system) in the unit of the number of virtual servers of the public cloud. However, for example, even when processing is executed by batch processing only on a predetermined limited date and time, a price is charged in the unit of the number of the virtual servers rented based on the usage contract; therefore, the user may feel that cost performance is not good.

In view of the foregoing, it is a main aim of the present invention to achieve readiness (convenience), cost performance, etc. about utilization of public clouds for users by providing systems and technique of a novel model related to utilization of the public clouds.

### MEANS FOR SOLVING THE PROBLEMS

To achieve the above-described aim, a typical aspect of the present invention is an information processing system (cloud-shared resource providing system), etc. for users to effectively use cloud computing systems such as public clouds (and service processing of them, etc.) and a feature is having configurations described below.

In a system of a present aspect, a plurality of user terminals, a resource provider, and a plurality of public clouds are configured to be communicably connected via a network. In each of the plurality of public clouds, a shared-use server managed by the resource provider is installed. The resource provider has a control unit, a storage unit, and a monitoring system. The control unit has a registration unit and an execution control unit. The storage unit stores data of a program of the user together with management information. The registration unit carries out processing of storing the data of the program of the user in the storage unit together with the management information based on an instruction from the user. The execution control unit carries out control processing so that the program of the user of the storage unit is executed by the target shared-use server of the target public cloud based on an instruction from the user. Based on the control from the execution control unit, the target shared-use server of the target public cloud operates processing of the program of the user. The monitor system monitors the state of operation of the processing of the program of the user in the target shared-use server of the target public cloud and carries out charge calculation processing with respect to the user based on the monitor information.

### EFFECTS OF THE INVENTION

According to the typical aspect of the present invention, readiness (convenience) related to usage of the public clouds by users, cost performance, etc. can be achieved by providing systems/techniques of a novel model related to usage of the public clouds. Particularly, desired application processing and batch processing can be achieved by users of companies, etc. readily using the various public clouds, and systems excellent in cost performance can be built. The business operator side can provide services of new models.

### BRIEF DESCRIPTIONS OF THE DRAWINGS

FIG. 1 is a diagram illustrating an overall configuration of a system (cloud-shared resource providing system) of an embodiment of the present invention;
FIG. 2 is a diagram illustrating processing sequences among elements in the system of the present embodiment;
FIG. 3 is a diagram illustrating a configuration example of management information in the system of the present embodiment;
FIG. 4 is a diagram illustrating an example (image) in which a plurality of users share public clouds in the system of the present embodiment;
FIG. 5 is a diagram illustrating a configuration example of a local pool, etc. as a more detailed configuration example of the present embodiment; and
FIG. 6 is a diagram illustrating a usage example (image) of conventional public clouds of users.

### BEST MODE FOR CARRYING OUT THE INVENTION

Hereinafter, embodiments of the present invention will be described in detail with reference to the accompanying drawings. Note that components having the same function are denoted by the same reference symbols throughout the drawings for describing the embodiment, and the repetitive description thereof will be omitted.

### <Conventional Example>

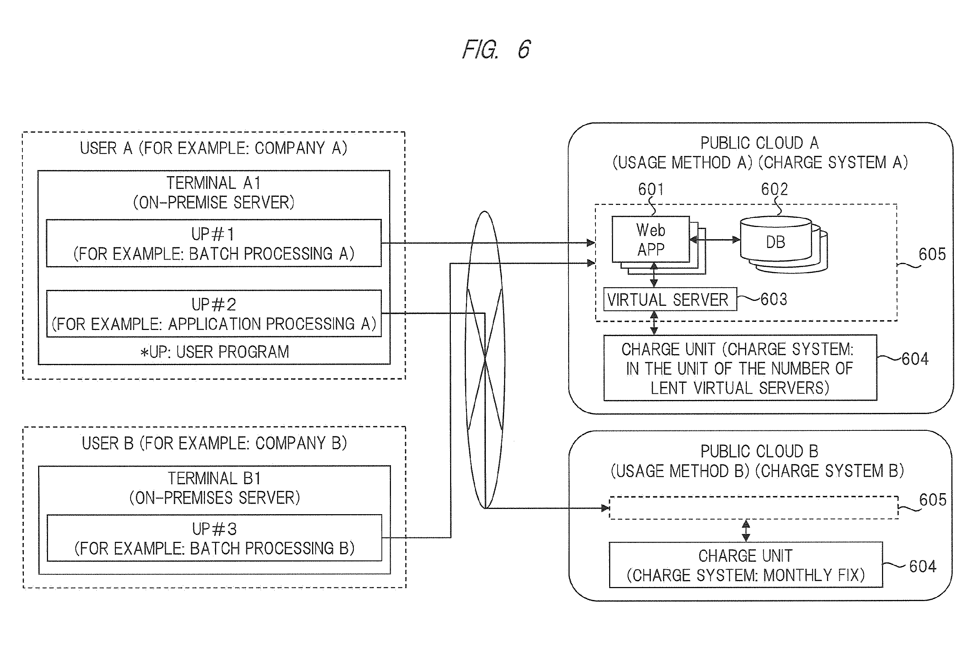

For a comparison with the present embodiment, an example in which users utilize public clouds in a system of a conventional example and problems, etc. thereof will be explained using FIG. 6.

In FIG. 6, a plurality of various public clouds, for example, A and B are provided, and a plurality of users, for example, A and B who utilize them are provided. For example, the user A (for example: company A) has user programs (UP) #1 and #2 in a terminal (computer) A1. A UP is a program for achieving processing (for example, application processing and batch processing) having desired contents of each user (for example, company system). The terminal A1 is, for example, an on-premises server (server installed by the company) installed in a system of the company A. The user B (for example: company B) has a user program (UP) #3 in a terminal B1. The terminal B1 is, for example, an on-premises server installed in a system of the company B.

In processing (for example: batch processing A) of the UP#1 of the terminal A1, the public cloud A (for example, a Web AP server 601) is accessed, and the processing is carried out using resources 605 of the public cloud A. Similarly, in processing (for example: application processing A) of the UP#2 of the terminal A1, the public cloud B (resource 605) is accessed to carry out the processing. Similarly, in processing (for example: batch processing B) of the UP#3 of the terminal B1, the public cloud A (resource 605) is accessed to carry out the processing.

For example, the public cloud A has a plurality of Web AP (web application) servers 601 and DBs 602. In the Web AP servers 601, which are physical servers, a plurality of virtual servers 603 are operated by using, for example, virtualization software and provide service processing using the virtual servers 603. The DBs 602 are databases or storages to which the Web AP servers 601 store data information (for example, user data) to be processed. 605 collectively represents resource/service processing including 601 to 603.

A charge unit 604 of the public cloud A carries out charge processing related to utilization of the public cloud A (resource 605) by the users. As a charge system thereof, for example, charging is carried out in a unit using a fixed number of virtual servers rented by the user (lent to the user) on a usage contract.

Similarly, the public cloud B has resources 605 including different servers, etc. A charge unit 604 of the public cloud B uses, for example, a flat monthly rate as a charge system. Like the above-described example, there are various usage methods and charge systems of the public clouds A and B, and users utilize them in accordance with corresponding usage methods and charge systems.

The UP#1 is, for example, a program for executing predetermined batch processing A, operated at a predetermined date and time, accesses the resources 605 (the virtual server 603, etc.) of the public cloud A via the network to achieve processing the public cloud A. The processing contents (codes) of the UP#1 are described as contents corresponding to the unique public cloud A. The user A (the terminal A1) uses the number of the virtual servers corresponding to a usage contract of the public cloud A for the UP#1 (the batch processing A).

Even when the above-described batch processing A is executed for a limited time such as 30 minutes in one day, according to the above-described charge system, it is charged in the unit of the fixed number of the virtual servers instead of the amount corresponding to processing execution time; therefore, the users may feel that the price is comparatively expensive.

Further, for example, while the public cloud A is accessed from the UP#1 of the terminal A1 via the network, delay or errors corresponding to, for example, the distance of the access from the terminal A1 may occur since the position of the public cloud (for example, the area in which a physical server of the public cloud is installed) differs depending on each of various public clouds. Therefore, the results of program processing of the user may be affected depending on the characteristics of the unique public cloud.

### <Outline, etc.>

In a system of the present embodiment, on the Internet, a resource provider (corresponding information processing system) is newly provided between a computer system/terminal of an unspecified user and various public clouds. The resources provided by the resource provider means shared-use servers (cloud-shared servers) provided in the public clouds. The shared-use servers are characteristic servers (including hardware and software) for sharing the target public clouds (and the resources thereof) by a plurality of users. The resource provider provides the shared-use servers (resources) to unspecified users based on usage contracts (charge). For example, this is resource lending in a pay-as-you-go charge system. The users register desired user programs in the resource provider and achieve processing (for example, application processing and batch processing) of the user programs by using the provided resources. In the user system, the necessity of retaining the user programs and on-premises servers, etc. for operating them is reduced.

The resource provider installs a shared-use server(s) (at least one in each of) the plurality of various public clouds serving as targets (project targets, installation targets) in advance. Moreover, the resource provider registers user programs (data thereof) in a pool in accordance with instructions/requests from the users. The resource provider carries out control so that the user programs in the pool are executed on the target shared-use servers of the target public clouds in accordance with instructions/requests from the users. In processing of the user programs on the shared-use servers, the processing of its own is carried out appropriately using resource/service processing (for example, virtual servers) of the public clouds.

Moreover, the resource provider monitors the operating states/results of the user programs in the shared-use servers of the public clouds by a monitoring system and carries out charge processing with respect to the users in accordance with the monitoring information. The users are charged only by the amount corresponding to, for example, time or processing volume of actual operation of the user programs; therefore, this is excellent in cost performance for the users.

### [System Configuration]

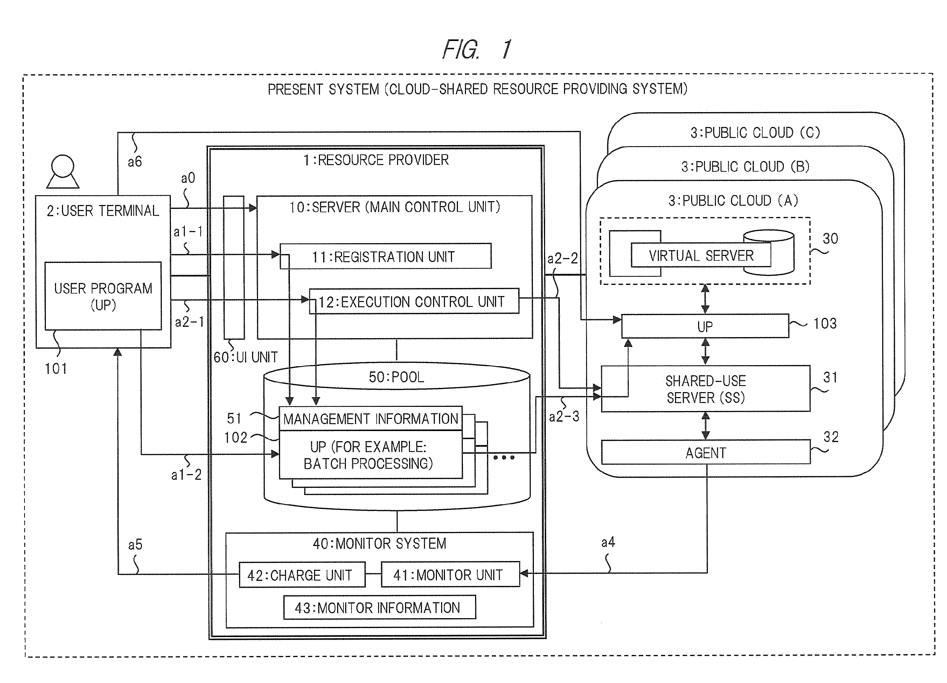

FIG. 1 illustrates a configuration example of the entirety of a system of the present embodiment. The entirety of the present system includes a resource provider 1, user terminals 2 (not shown, but are plural), and a plurality of various public clouds 3 (for example: A, B, C, etc.), and they are connected by a communication network (the Internet).
(1) The resource provider 1 has a server (main control unit) 10, a pool 50 (user program storage unit), a monitor system 40, and a UI (user interface) unit 60, and these units are connected by, for example, a LAN. The resource provider 1 is a system of a business operator interposed between a plurality of users (2) and the plurality of public clouds 3 and provides shared-use servers 31, which are resources for effectively using the public clouds 3, to the users (2) (resource lending according to usage contracts). The resources can be provided at a low cost by a mechanism of sharing the shared-use servers 31 by the plurality of users (2).
(2) The user terminal 2 is, for example, a computer system or a terminal used by unspecified users. The user terminal 2 has a user program (UP) 101 in addition to publicly-known elements such as a processor, a memory, a communication interface, an OS, and a Web browser, which are not shown. The UP 101 is data of a program of desired processing (for example, application processing or batch processing) to be executed by the user (2) with respect to the public clouds 3.
(3) The public cloud 3 has: a resource 30, which is a publicly-known technique part; a shared-use server (SS) 31, which is a characteristic element of the present system; a user program (UP) 103, which is operated on the SS 31; and an agent 32, which cooperates with the monitor system 40 of the resource provider 1. In the same manner as the above description (605), the resource (service) 30 includes resources and service processing such as a physical server, a virtual server, and a DB originally provided in the public cloud 3.
(31) The shared-use server (SS) 31 is installed (prepared) in the target public cloud 3 in advance by the resource provider 1. The SS 31 operates processing of the target UP 103 on the SS 31 in accordance with an instruction (a2-2) from an execution control unit 12 of the resource provider 1 (the server 10). The processing of the UP 103 is carried out while appropriately referencing the resource (service) 30 of the public cloud 3. The processing of the plurality of UPs 103 can be operated on the SS 31.
(32) The agent 32 is, for example, operated together on the corresponding target shared-use server (SS) 31 (may be configured to be operated on, for example, a different server). Based on monitor configuration information, the agent 32 monitors the working/state (change thereof) of the target SS 31 and the working/state (change thereof) of the UP 103 operated on the target SS 31 as monitoring contents, issues monitor information (a4) representing the contents, and transmits the information to the monitor system 40 (a monitor unit 41) via the network. The monitoring of the UP 103 includes at least recognition of activation (start) and stop (termination) of the processing (process or instance) of the UP 102.
(10) The server 10 is a main control unit of the present system (the resource provider 1) and has a registration unit 11 and the execution control unit 12. The processing units (11, 12) are achieved by software program processing using publicly-known elements such as a processor, a memory, and a communication interface provided in the server 10.
(50) The pool 50 is a user program storage unit and is achieved by using a storage or a DB and input/output control processing thereof. In the pool 50, user program (UP 102) data is stored together with corresponding management information 51. The server 10 creates/manages the management information 51.
(60) The UI unit 60 is a processing unit, which provides a user interface for, for example, setting functions of the present system or inputting instructions, to the user (2). The user can access a Web page(s), which is provided by the UI unit 60, from the user terminal 2 (Web browser), check display information (for example, configuration state) by the Web page, and operate various configurations and instructions (for example, a0, a1-1, a2-1).
(40) The monitor system 40 has the monitor unit 41, a charge unit 42, and monitor information 43 (history information). The monitor system 40 is implemented by, for example, a server and mainly carries out monitor processing for charging the user. The monitor system 40 part may be configured to be cooperated as a system separated from the resource provider 1 and the server 10. As the monitor system 40 part, for example, an existing integrated monitoring system (system which monitors the working/state of virtual servers, etc. of clouds) or a charge management system may be used.
(41) The monitor unit 41 cooperates with the agent 32 operated in the public cloud 3, monitors the working/state of the shared-use server (SS) 31 based on monitor information (a4) from the agent 32, and records it as the monitor information 43. The contents of the monitoring include the working/state of the SS 31 and the working/state of the UP 103 operated on the SS 31.
(42) The charge unit 42 carries out charge calculation processing (for example, pay-as-you-go charge corresponding to the operating time or processing volume of the UP 103 on the SS 31) based on the monitor information 43 and based on charge configuration information of the user, saves result information, gives a charge billing notification (a5) to the user terminal 2, and carries out processing of displaying charge information on the Web page of the UI unit 60. The charge billing for the user (2) may be given in cooperation with, for example, an existing payment system.
(11) The registration unit 11 carries out processing (UP 102) of storing (registering) data (copy) of the user program (UP) 101 with the management information 51 attached thereto in the pool 50 based on the instruction (a1-1) of UP advance registration from the user (2). Moreover, in the case of update of the contents (version) of the UP 101 in accordance with an instruction from the user, the registration unit 11 updates data of the UP 102 of the pool 50 with new data from the user side; and, in a case of registration cancellation, the data of the UP 102 concerned of the pool 50 is deleted.
(12) Based on an UP execution instruction (a2-1) from the user (2), the execution control unit 12 carries out processing of referencing the data of the UP 102 of the pool 50 and the management information 51 and transmitting (copying) the UP execution instruction (a2-2) and the data of the target UP 102 to the target SS 31 of the target public cloud 3 (a2-3).

### [Processing Sequence]

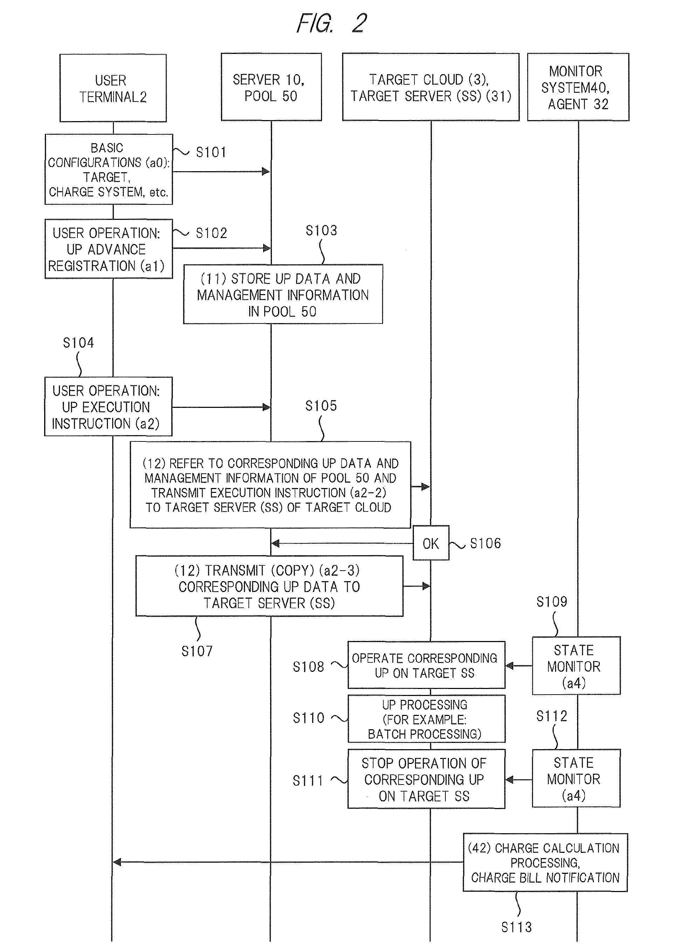

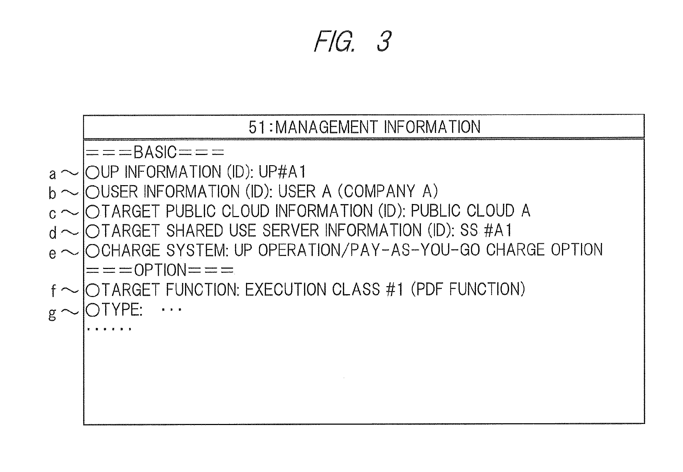

FIG. 2 illustrates processing sequences among the elements of the present system (FIG. 1) (S101 etc. represent processing steps).
(S101) First, a usage contract between the user (2) and the resource provider (1) is present, and basic configurations (a0) including which public cloud 3, which shared-use server (SS) 31, and functions thereof are to be used as targets, designation of a charge system (for example, pay-as-you-go charge and details thereof), etc. are set. For example, an operation of the basic configurations (a0) is carried out with respect to the UI unit 60 of the server 10 by, for example, the user or an administrator of the business operator side, and basic configuration information (not illustrated) is saved in the resource provider 1.
(S102) The instruction (a1-1) of advance registration of the data of the UP 101 is given from the user terminal 2 to the registration unit 11 via the UI unit 60 of the server 10 based on an operation by the user.
(S103) In accordance with the above-described instruction (a1-1), the registration unit 11 acquires (receives) the data (copy) of the UP 101 from the user terminal 2 and stores the data of the UP 102 in the pool 50 with the management information 51 of the UP 102 (specific example is in FIG. 3) attached thereto.
(S104) In the registered state, the UP execution instruction (a2-1) is transmitted from the user terminal 2 to the execution control unit 12 via the UI unit 60 of the server 10 at optional timing based on an operation of the user. The execution control unit 12 receives the instruction (a2-2).
(S105) The execution control unit 12 references/acquires the corresponding data of the UP 102 and the management information 51 in the pool 50 in accordance with the above-described instruction (a2-2) and, first, transmits the execution instruction (a2-2) of the target UP to the target SS 31 of the target public cloud 3. At this point, the UP 102 data has not been transmitted yet.
(S106) When the target SS 31 of the target public cloud 3 receives the above-described instruction (a2-2), for example, if it is in a state that the target UP can be executed in the SS 31 ("OK"), the fact of OK is responded to the server 10. If it is not in an executable state ("NG"), the fact of NG is responded. The above-described state (OK/NG) is determined in accordance with, for example, the load of the SS 31 or the state of resources.
(S107) When the execution control unit 12 receives the above-described response of OK, the execution control unit 12 transmits the data (copy thereof) of the corresponding UP 102 to the target SS 31 of the target public cloud 3 via the network (a2-3). The target SS 31 receives/acquires the UP data concerned.
(S108) Subsequently, the target SS 31 activates (starts) processing of the above-described instructed and received target UP (102) on the SS 31 (UP 103). If the UP 103 is batch processing, it is activated at a predetermined date and time.
(S109) The agent 32 is monitoring the working/state of the target SS 31. For example, when the target SS 31 activates the processing of the UP 103 in S108, the monitor data (a4) indicating the activation is issued and transmitted to the monitor unit 41 via the network. The monitor unit 41 receives the monitor data (a4) and records the data as history information (the monitor information 43).
(S110) In the target SS 31, the UP 103 concerned executes predetermined processing (for example, batch processing) of its own while optionally using the resources (services) 30 of the public cloud 3. The program processing is executed by using publicly-known elements such as a processor, a memory, and a communication interface of the SS 31. Also, in accordance with needs, the processing may be carried out by making access from the user terminal 2 to the UP 103 of the SS 31 via the network (a6).
(S111) The target SS 31 stops (terminates) the processing of the corresponding UP 103 on the SS 31 at predetermined timing. For example, if the UP 103 is batch processing, the activation is terminated when processing of a predetermined date and time is finished. This timing may depend on a stop instruction of the UP from the user (2) side. In that case, in the same manner as the above description, the stop instruction of the corresponding UP 103 is transmitted from the execution control unit 12, which has received the instruction, to the target SS 31, and the SS 31 stops operation of the UP 103.
(S112) In the same manner as the above description, the agent 32 is monitoring termination of the processing of the UP 103 on the target SS 31; and, upon the termination, the agent 32 issues the monitor data (a4) indicating that and transmits the data to the monitor unit 41 via the network. The monitor unit 41 receives the monitor data (a4) and records the data as the history information (the monitor information 43). The monitor unit 41 can recognize the working/state of the SS 31 and the UP 103 by referencing the monitor data (a4) and the monitor information 43. Particularly when the above-described UP 103 is batch processing, the state of activation is monitored only at a predetermined date and time.
(S113) The charge unit 42 cooperates with the monitor unit 41 to reference the monitor information 43, etc. indicating the operation/state of the SS 31 and the UP 103 and carries out charge calculation processing (for example, pay-as-you-go charge corresponding to operating time of the processing of the UP 103) based on the charge configuration information (charge system) of the corresponding user. The charge unit 42 records the result information of the charge calculation, gives the notification (a5) of the charge bill to the user (2), and displays the charge request information on the Web page displayed by the UI unit 60.

The above-described monitor unit 41 or the charge unit 42 may separately create and save the information for the charge calculation from the monitor information 43. In accordance with the charge system, for example, the information of the volume of usage of the resource 30 in the processing of the UP 103 or the information of the time from start to end of the processing of the UP 103 may be created.

### [Management Information]

FIG. 3 illustrates a configuration example of the management information 51 of the UP 102 managed by the server (main control unit) 10. Examples of information items managed in the management information 51 include: (a) UP information, (b) user information, (c) target public cloud information, (d) target shared-use server (SS) information, and (e) charge method; and, furthermore, as option information, examples include (f) target functions and (g) types.
(a) The UP information is, for example, identification information (ID) or an address of the UP 101 and is denoted as, for example, "UP#A1". (b) The user information is, for example, an ID or an address of the user (2) of the UP 101 and is denoted as, for example, "USER A". (c) The target public cloud information is, for example, an ID or an address of the public cloud 3 serving as a target for operating the UP and is denoted as, for example, "PUBLIC CLOUD A". (d) The target-shared-use server (SS) information is, for example, an ID or an address of the SS 31 serving as a target for operating the UP and is denoted as, for example, "SS#A1". If the plurality of SSs 31 are present in the target public cloud 3, the SS can be specified therefrom.
(e) The charge system can be selected as, for example, a pay-as-you-go charge system corresponding to the operation of the UP (103) as the charge configuration information.
(f) The target functions are the information representing functions (execution class) desired to be used by the UP among the functions provided by the target SS 31. Examples of the functions include presence/absence of a PDF function. If the functions are different in each SS 31, the functions can be specified by the above-described (d) target SS information.
(g) The type is, for example, the information specifying the type (system) of sharing use of the SS 31. Examples of the types include: operating the UP 103 only in the particular SS 31 in the public cloud 3, making the UP 103 operate on the plurality of arbitrary SS 31 in the public cloud 3, and specification of the priority order of use in the plurality of SSs 31 in the public cloud 3 (described later).

### [Usage Example]

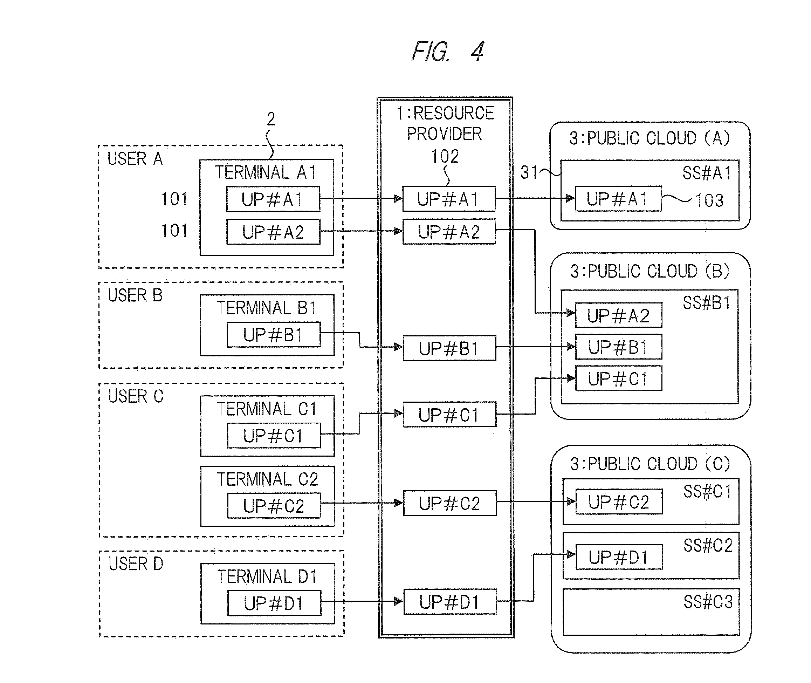

FIG. 4 illustrates an example in which the plurality of users (2) (the plurality of UPs 101) use the public clouds 3 (SSs 31) via the resource provider 1 of the present system (FIG. 1). This example has a user A (terminal A1), a user B (terminal B1), a user C (terminals C1, C2), and a user D (terminal D1) and has a public cloud A (SS#A1), a public cloud B (SS#B1), and a public cloud C (SS#C1, SS#C2, SS#C3).

The user A (terminal A1) registers a UP#A1 which is a first program and causes the program to operate on the SS#A1 of the target public cloud A. Also, the user A registers a UP#A2 which is a second program and causes the program to operate on the SS#B1.

The user B (terminal B1) registers a UP#B1 and causes it to operate on the SS#B1 of the target public cloud B. The user C (terminal C1) registers a UP#C1 and causes it to operate on the SS#B1 of the target public cloud B. On the SS#B1, the plurality of UPs 103 including the UP#A2, the UP#B1, and the UP#C1 operate together.

The user C (terminal C2) registers the UP#C2 and causes it to operate on the SS#C1 of the target public cloud C. The user D (terminal D1) registers the UP#D1 and causes it to operate on the SS#C2 of the target public cloud C. The UPs 103 operate on the SS#C1, the SS#C2, and the SS#C3 in the public cloud C, respectively.

### [Detailed Configuration Example]

Next, a more detailed configuration example based on the above-described embodiment will be explained. A basic configuration is similar to that of FIG. 1, etc., and different configurations will be explained below.

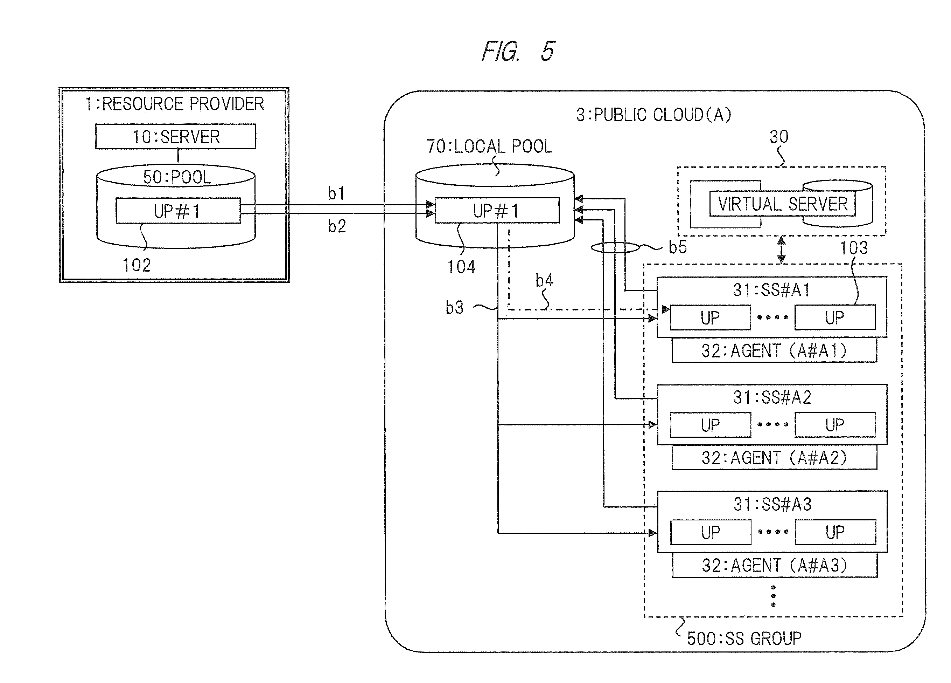

In FIG. 5, a local pool 70 for storing user programs (UPs) is provided in the target public cloud 3. The local pool 70 has a correspondence relation with the pool 50 on the resource provider 1 side, is achieved by, for example, a storage or a DB, and stores a copy of data of the UP 102 of the pool 50 as a UP 104. I the same manner to the pool 50 side, necessary management information is attached to the UP 104.

The plurality of shared-use servers (SSs) 31 are provided in the target public cloud 3. For example, three SSs 31, i.e., a SS#A1, a SS#A2, and a SS#A3 in a SS group 500 are illustrated. Each SS 31 of the SS group 500 uses the resources 30 in the same manner as the above description. The agents 32 operate along with the plurality of SSs 31 and monitor the working/state of the SS 31, respectively in the same manner as the above description. For example, the agents 32 (A#A1, A#A2, A#A3) respectively for the SS 31 are provided.

In the first time, the execution control unit 12 of the control unit 10 of the resource provider 1 transmits (copies) the data of the UP 102 of the pool 50 to the local pool 70 and stores the data therein (b1). In the second time or thereafter, the execution control unit 12 checks the difference (for example, version) between the data of the UP 102 of the pool 50 and the data of the UP 104 of the local pool 70; if update to the latest data is required, the data of the UP 102 of the pool 50 is transmitted (copied) to update the data of the UP 104 on the local (70) side; and, if not required, it is not transmitted (b2). In this manner, the communication between the resource provider 1 and the public cloud 3 is suppressed.

On the public cloud 3 side, management/reference of the local pool 70 is carried out by, for example, the SS 31. Each SS 31 accesses the local pool 70 and reads/writes the data of the UP 104 and the management information in the local pool 70 (b5).

Upon execution control of operating the UP 103 on the SS 31 based on an instruction from the above-described user (2), the SS 31 to be a target for operating the UP 103 can be selected from the SS group 500 (option) (b3). For example, in the public cloud 3 side (SSs 31), the single SS 31 for the UP 104 to operate on is dynamically determined (b4). For example, the load/resource state of the plurality of SSs 31 is subjected to comparison, and the SS 31 in a good state with a low load is selected. The selected single SS 31 (for example: SS#A1) takes out the data (copy) of the corresponding UP 104 of the local pool 70 and causes the same to operate on the SS 31 (SS#A1).

In addition, it is not limited to the above-described dynamic determination and thus the single SS 31 may be selected (instructed) by the user (2) or one of a plurality of candidate SSs 31 may be sequentially selected.

The plurality of SSs 31 (500) provided in the public cloud 3 are not limited to the SSs 31 of a single type, and the SSs 31 of various types (for example, having different server types or functions) may coexist. For example, as the SSs 31 having different functions, the SS 31 having a PDF function and the SS 31 not having it are provided. In that case, control is carried out so that the desired function (for example: the PDF function) of the SS 31 is selected and executed in accordance with, for example, the configuration or instruction of the user (UP) (can be also configured by the target function of 'f' of 51 of FIG. 3). Upon a UP execution instruction (above-described a2-1) from the user (2) side, an execution class corresponding to a desired function (for example: PDF function) of the user can be specified. In that case, the SS 31 having the execution class (function) corresponding to the specification is selected.

In the case in which selection can be made form the plurality of SSs 31, for example, a priority order of selection of the plurality of SSs 31 may be determined by, for example, configurations or instructions from the user (2) side. Upon execution control, the SS 31 is selected in accordance with the priority order.

### [Effects, etc.]

As explained above, according to the present embodiment, readiness (convenience) related to usage of the public clouds 3 by the users (2), cost performance, etc. can be achieved by providing a system having a new model including the resource provider 1. Particularly, the users (2) such as companies can readily use the various public clouds 3 and achieve, for example, application processing, batch processing, etc., and a system (for example, company system) that is excellent in cost performance can be built. The business operator side can provide services of new models.

Particularly, by virtue of, for example, the pay-as-you-go charge system corresponding to the operation amount of the UP 103 in the shared-use server (SS) 31, even when, for example, the UP 101 is a batch processing program, only the price corresponding to the execution time of the batch processing of a limited date and time is required, and an on-premises server or the like in the user system is not required to be provided. Therefore, it is inexpensive for the users (2).

In the foregoing, the invention made by the inventor of the present invention has been concretely described based on the embodiments. However, it is needless to say that the present invention is not limited to the foregoing embodiments and various modifications and alterations can be made within the scope of the present invention.

### INDUSTRIAL APPLICABILITY

The present invention can be used as a novel system for unspecified users such as companies and ordinary individuals to effectively use resources/services such as public clouds on a network.

## Claims

1. A cloud-shared resource providing system wherein
a plurality of user terminals, a resource provider, and a plurality of public clouds are communicably connected via a network;
in each of the plurality of public clouds, a shared-use server managed by the resource provider is installed;
the resource provider has a control unit and a storage unit; the control unit has a registration unit and an execution control unit;
the storage unit stores data of a program of the user together with management information;
the registration unit carries out processing of storing the data of the program of the user in the storage unit together with the management information based on an instruction from the user;
the execution control unit carries out control processing so that the program of the user of the storage unit is executed by the target shared-use server of the target public cloud based on an instruction from the user; and
based on the control from the execution control unit, processing of the program of the user is caused to operate on the target shared-use server of the target public cloud.

2. The cloud-shared resource providing system according to claim 1, wherein
the resource provider has a monitor system,
the monitor system monitoring the state of operation of the processing of the program of the user in the target shared-use server of the target public cloud and carrying out charge calculation processing with respect to the user based on the monitor information.

3. The cloud-shared resource providing system according to claim 1, wherein,
with respect to the resource provider, the user can specify the public cloud and the shared-use server to be targets for operating the program of the user.

4. The cloud-shared resource providing system according to claim 2, wherein,
as a charge system with respect to the user, the monitor system carries out charge calculation processing of a pay-as-you-go charge system corresponding to an operating time or a processing volume of the processing of the program of the user in the target shared-use server of the target public cloud.

5. The cloud-shared resource providing system according to claim 1, wherein
the plurality of shared-use servers are provided in the public cloud, and
the execution control unit carries out control processing so that the program of the user of the storage unit is executed in a single server selected among the plurality of shared-use servers of the target public cloud.

6. The cloud-shared resource providing system according to claim 5, wherein,
when the single server is to be selected from the plurality of shared-use servers of the target public cloud, the execution control unit selects a single server having a small load.

7. The cloud-shared resource providing system according to claim 5, wherein
the plurality of shared-use servers in the public cloud have mutually different functions, and,
when the single server is to be selected from the plurality of shared-use servers of the target public cloud, the execution control unit selects a single server having a predetermined function based on an instruction or configuration from the user.

8. The cloud-shared resource providing system according to claim 1, comprising,
in the public cloud, a local storage unit that stores, together with the management information, a copy of data of the program of the user of the storage unit on the resource provider side;
wherein, in a first time, first data of the program of the user of the storage unit on the resource provider side is copied as second data to the local storage unit in the public cloud side, and in a second time and thereafter, the copying to the local storage unit is carried out only when the first and second data is different from each other; and,
when the program of the user is to be executed by the target shared-use server of the target public cloud, the target shared-use server retrieves the second data of the program of the user of the local storage unit and executes processing of the program of the user.
